# EUROPEAN PATENT APPLICATION

(11) **EP 4 811 786 A1**
(43) Date of publication of application: **23.09.2026**
(21) Application number: 25315092.4
(22) Date of filing: 21.03.2025
(51) Int. Cl.: H04N 19/176, H04N 19/52, H04N 19/70

(54) **METHOD AND APPARATUS FOR CODING USING IMPROVED INTRA BLOCK COPY SIGNALING**

(71) Applicant: Beijing Xiaomi Mobile Software Co., Ltd., Beijing Beijing 100085 (CN)
(72) Inventor: Abdoli, Mohsen, Beijing, 100085 (CN); Tissier, Alexandre, Beijing, 100085 (CN); Ghaznavi Youvalari, Ramin, Beijing, 100085 (CN); Plowman, Frank, Beijing, 100085 (CN)
(74) Representative: Zimmermann, Tankred Klaus

(57) **Abstract**

Provided is a method for decoding a picture (12) from a data stream, the method comprising: predicting a coding unit, CU, (10) of the picture (12) using intra block copy, IBC, by decoding (S10) a first syntax element from the data stream for the CU (10); responsive (S12) to the first syntax element having a first predetermined state, deriving a block vector, BV, (14) pointing to - a previously decoded portion (16) of the picture (12) relative to the CU (10) by decoding a first component of the BV (14) from the data stream and inferring a second component of the BV (14) to be zero, and deriving a predictor for the CU (10) by subjecting a version of the previously decoded portion (16) of the picture to flipping.

## Description

### Technical Field

The present disclosure generally relates to the field of encoding/decoding pictures, images or videos, and embodiments of the present disclosure concern improvements regarding improve intra block copy signaling.

### Background

Intra block copy (IBC) is a tool adopted in HEVC extensions on SCC. It is well known that it significantly improves the coding efficiency of screen content materials. Since IBC mode is implemented as a block level coding mode, block matching (BM) is performed at the encoder to find the optimal block vector (or motion vector) for each CU. Here, a block vector is used to indicate the displacement from the current block to a reference block, which is already reconstructed inside the current picture. The luma block vector of an IBC-coded CU is in integer precision. The chroma block vector rounds to integer precision as well. When combined with AMVR, the IBC mode can switch between 1-pel and 4-pel motion vector precisions. An IBC-coded CU is treated as the third prediction mode other than intra or inter prediction modes. The IBC mode is applicable to the CUs with both width and height smaller than or equal to 64 luma samples.

At the encoder side, hash-based motion estimation is performed for IBC. The encoder performs RD check for blocks with either width or height no larger than 16 luma samples. For non-merge mode, the block vector search is performed using hash-based search first. If hash search does not return valid candidate, block matching based local search will be performed.

In the hash-based search, hash key matching (32-bit CRC) between the current block and a reference block is extended to all allowed block sizes. The hash key calculation for every position in the current picture is based on 4x4 subblocks. For the current block of a larger size, a hash key is determined to match that of the reference block when all the hash keys of all 4×4 subblocks match the hash keys in the corresponding reference locations. If hash keys of multiple reference blocks are found to match that of the current block, the block vector costs of each matched reference are calculated and the one with the minimum cost is selected.

In block matching search, the search range is set to cover both the previous and current CTUs.

At CU level, IBC mode is signalled with a flag and it can be signaled as IBC AMVP mode or IBC skip/merge mode as follows:
- IBC skip/merge mode: a merge candidate index is used to indicate which of the block vectors in the list from neighboring candidate IBC coded blocks is used to predict the current block. The merge list consists of spatial, HMVP, and pairwise candidates.
- IBC AMVP mode: block vector difference is coded in the same way as a motion vector difference. The block vector prediction method uses two candidates as predictors, one from left neighbor and one from above neighbor (if IBC coded). When either neighbor is not available, a default block vector will be used as a predictor. A flag is signaled to indicate the block vector predictor index.

To reduce memory consumption and decoder complexity, the IBC in VVC allows only the reconstructed portion of the predefined area including the region of current CTU and some region of the left CTU.

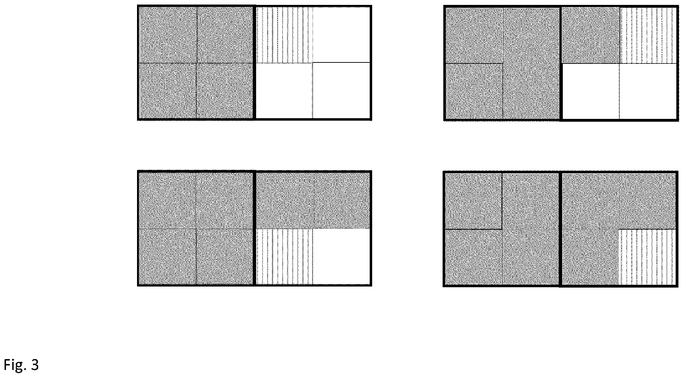

Fig. 3 illustrates the reference region of IBC Mode, where each block represents 64x64 luma sample unit.

Depending on the location of the current coding CU location within the current CTU, the following applies:
- If current block falls into the top-left 64x64 block of the current CTU, then in addition to the already reconstructed samples in the current CTU, it can also refer to the reference samples in the bottom-right 64x64 blocks of the left CTU, using CPR mode. The current block can also refer to the reference samples in the bottom-left 64x64 block of the left CTU and the reference samples in the top-right 64x64 block of the left CTU, using CPR mode.
- If current block falls into the top-right 64x64 block of the current CTU, then in addition to the already reconstructed samples in the current CTU, if luma location (0, 64) relative to the current CTU has not yet been reconstructed, the current block can also refer to the reference samples in the bottom-left 64x64 block and bottom-right 64x64 block of the left CTU, using CPR mode; otherwise, the current block can also refer to reference samples in bottom-right 64x64 block of the left CTU.

- If current block falls into the bottom-left 64x64 block of the current CTU, then in addition to the already reconstructed samples in the current CTU, if luma location (64, 0) relative to the current CTU has not yet been reconstructed, the current block can also refer to the reference samples in the top-right 64x64 block and bottom-right 64x64 block of the left CTU, using CPR mode. Otherwise, the current block can also refer to the reference samples in the bottom-right 64x64 block of the left CTU, using CPR mode.
- If current block falls into the bottom-right 64x64 block of the current CTU, it can only refer to the already reconstructed samples in the current CTU, using CPR mode.

This restriction allows the IBC mode to be implemented using local on-chip memory for hardware implementations.

Reconstructed Reordered IBC is an intra-frame coding tool that was originally proposed in JVET-AA0070. In this method which is mostly designed for text coding in screen contents, symmetric textures are considered for intra coding with IBC. The BV search of regular IBC typically looks for exact match to texture of current block. However, the RRIBC method also considers flipped versions of a prediction block. This characteristic is useful mostly two scenarios when coding text characters:
**1.** For some alphabetic letters in certain font types, there are symmetric letters available. For example, in most font types b-d, p-b are symmetric counterparts.
**2.** For some alphabetic letters in certain font types, there is symmetry within the same character. For instance, in most font types, the letters 'A', 'M', 'U' and 'D', 'E', 'K' are symmetric in the horizontal and vertical directions, respectively.

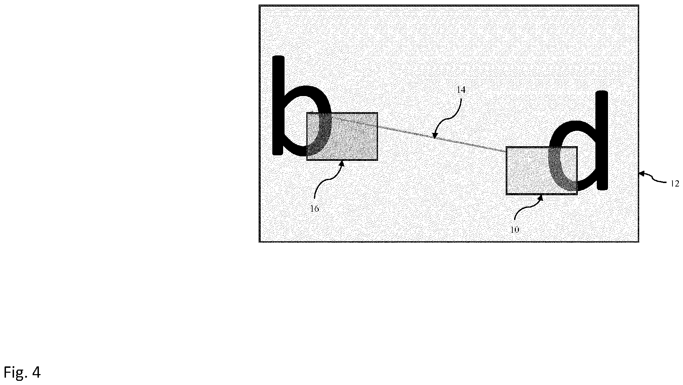

In above scenarios, if current block contains a part or the whole of one of those letters, and the BV of IBC is able to point to an area of the reconstructed image which contains the symmetric letter, then the prediction could be accurate given a proper flip of the prediction area. The process of RRIBC allows such flipping using explicit signaling of the flip type. Fig. 4 visualizes a simplified example of using RRIBC to capture the texture of a coded letter 'b' for current block that covers part of the letter 'd'.

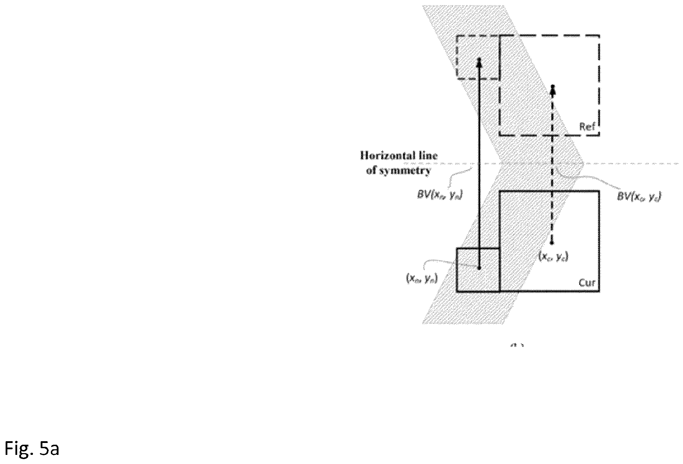

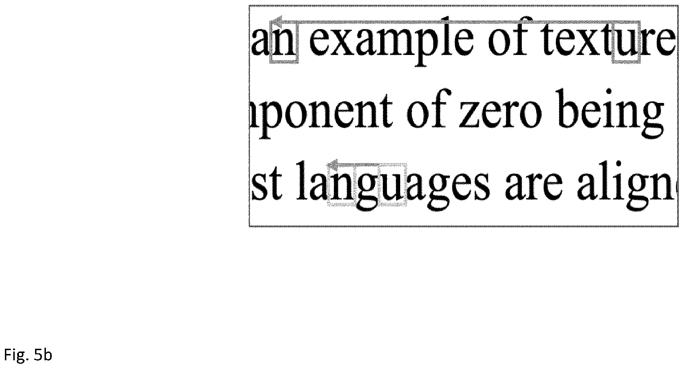

For two reasons, the BV of RRIBC blocks tend to have one zero component in horizontal or vertical direction.
- First, symmetric structures in letters or texture objects allow finding a flipped version of current texture in the same area that is horizontally or vertically aligned with current block. Fig. 5a shows an example of texture structure with vertical symmetry, allow a BV with horizontal component of zero being efficient for IBC.
- Second, since texts in most languages are aligned in horizontal lines or sometimes vertical lines, it is more likely that the symmetric counterpart of the letter in current block is found in the same written line.

Zero Block Vector Component (ZBVC) was originally proposed in JVET-AC0060. In this proposal, the IBC candidates are grouped in different clusters. In this contribution, the IBC AMVP list construction is modified based on the clustering of the block vector predictor (BVP) candidates according to the distance between them, and the sign prediction of the BVD if the BV has one null component.

This contribution proposes a new signaling for IBC BVs with one null component. This includes RRIBC and non-RRIBC blocks. In this new signaling, BVs with one null component, are signaled to the decoder by a bvOneNullComp flag, which in this invention is referred to as ZbvcFlag (Zero BV Component flag). Instead of invoking the AMVP IBC list construction, two new BVP candidates are determined, which are adjusted to the boundaries of the valid IBC search region according to the horizontal or vertical direction indicated by a bvNullCompDir flag, which in this contribution is referred to as ZbvcDir (Zero BV Component Direction).

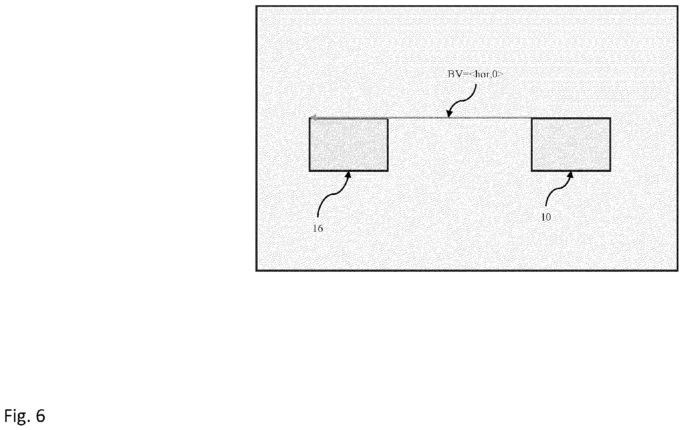

Fig. 6 demonstrates an example of BV, with one null component that is signalled with ZbvcFlag=1 and ZbvcDir=0 (0:vertical is null, 1:horizontal is null)

### Summary

It is the object of the present invention to provide a coding concept for coding a picture using IBC which is more efficient.

This object is achieved by the subject matter of the independent claims.

It a basic finding underlying the present application that a picture coding concept making use of IBC may be made more efficient by rendering it possible to concurrently signal the use of RRIBC and ZBVC for a certain CU by way of one predetermined state of a syntax element. By this measure, it is, in terms of signaling costs, very efficient to signal the use both RRIBC and ZBVC for a certain IBC coded CU. Since, however, according to a finding of the inventors, RRIBC and ZBVC are , at high likelihood, both favorable to be used for an IBC coded CU, spending one predetermined state of one common syntax element is efficient in that merely one syntax element needs to be signalled in such case for such CU despite activating RRIBC and ZBVC.

In even other words, the application is based on the observation that RRIBC and ZBVC modes share significant common aspects. As a result, their use is highly correlated, meaning that when one of them is used, it is most likely that the other one is also used. While the above outlined current design of IBC signaling allows a case where ZBVC is used but RRIBC is not used, in practice, this combination proves to be inefficient, so that allowing its combinatory syntax is a waste of bitrate in most cases. This waste of bitrate is avoided according to the present application.

It is to be understood that the content described in this section is not intended to identify key or critical features of the embodiment of the present disclosure, nor is it intended to limit the scope of the present disclosure. Other features of the present disclosure become readily apparent from the following description.

### Brief Description of the drawings

The drawings are explanatory and serve to explain the present disclosure, and are not to be construed to limit the present disclosure to the illustrated embodiments.
Fig. 1 shows a block diagram of a conventional video encoder into which embodiments of the present application may be built into, thereby arriving at further embodiments beyond those discussed herein;
Fig. 2 shows a block diagram of a conventional video decoder into which embodiments of the present application may be built into, thereby arriving at further embodiments beyond those discussed herein;
Fig. 3 shows a current CTU processing order and its available reference samples in current and left CTU;
Fig. 4. shows a conventional RRIBC mode as it might, aside modifications of signaling, also be embodied in embodiments of the present application;
Fig. 5a shows a symmetric structure in the same letter/object;
Fig. 5b shows texts arranged in vertical lines;
Fig. 6 shows conventional ZBVC, with vertical BV component inferred to be zero;

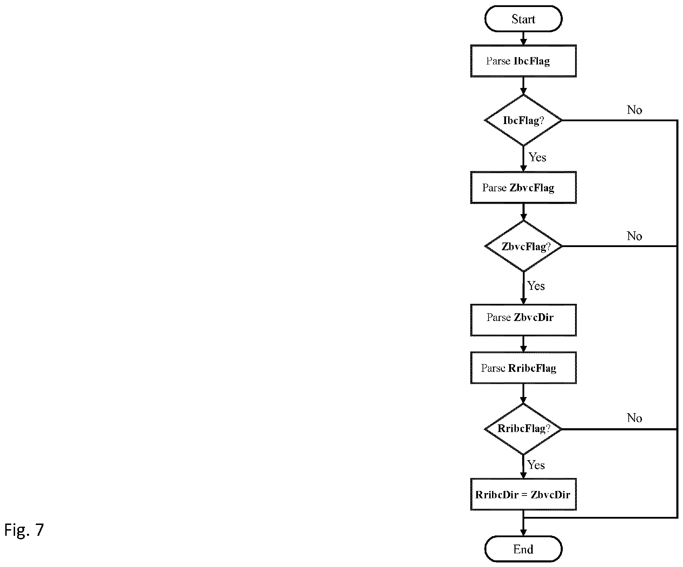

Fig. 7 shows a state-of-the-art signalling scheme of RRIBC and ZBVC modes in ECM;
Fig. 8 shows parsing of ZBVC information and reusing them for RRIBC information, forming an embodiment of the present application;
Fig. 9 shows parsing RRIBC information and reusing them for ZBVC information, forming a further embodiment of the present application;
Fig. 10 shows a data stream in accordance with embodiments of the present disclosure; and
Fig. 11 shows a block diagram illustrating an electronic device according to embodiments of the present disclosure.

### Detailed Description of Embodiments

Illustrative embodiments of the present disclosure are described below with reference to the drawings, where various details of the embodiments of the present disclosure are included to facilitate understanding and are to be considered as illustrative only. Accordingly, those of ordinary skill in the art recognize that various changes and modifications of the embodiments described herein can be made without departing from the scope of the present disclosure. Also, descriptions of well-known functions and constructions are omitted from the following description for clarity and conciseness.

In the present disclosure, the term "and/or" is intended to cover all possible combinations and sub-combinations of the listed elements, including any one of the listed elements alone, any sub-combination, or all of the elements, and without necessarily excluding additional elements.

In the present disclosure, the phrase "at least one of...or..." is intended to cover any one or more of the listed elements, including any one of the listed elements alone, any sub-combination, or all of the elements, without necessarily excluding any additional elements, and without necessarily requiring all of the elements.

In the present disclosure, the term "coding" refers to "encoding" or to "decoding" as becomes apparent from the context of the described embodiments. Likewise, the term "coder" refers to "an encoder" or to "a decoder".

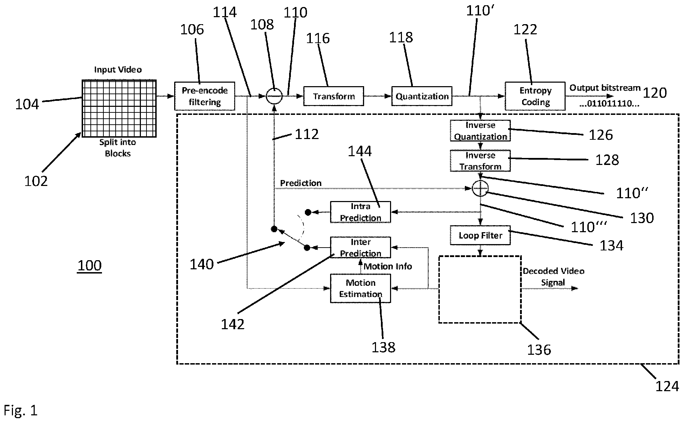

A block diagram of a standard video compression system 100 operating in accordance with the VVC standard is illustrated in Fig. 1. The standard video coder 100 compresses and encodes a picture 102 of a video sequence. The picture 102 to be encoded is partitioned into blocks 104 also referred to as coding units, CUs. The encoder 100 comprises a pre-encode filter 106 and a prediction residual signal former 108 which generates a prediction residual signal 110 so as to measure a deviation of a prediction signal 112 from the signal 114 output by the filter 106. The encoder further comprises a transformer 116, a quantizer 118 and provides an output bitstream or data stream 120 using an entropy coder 122. Further, the encoder 100 comprises a prediction stage 124 for determining the prediction signal 112, which includes a de-quantizer or inverse quantizer 126, an inverse transformer 128, a combiner 130, an in-loop filter 134, a picture buffer 136, a motion estimator 138, an intra/inter mode selector 140, an inter predictor 142 and an intra predictor 144.

The video coder 100 as described with reference to Fig. 1 compresses and encodes a picture 102 of a video sequence as follows. The picture 102 to be encoded is partitioned into the blocks or CUs 104. Each coding unit 104 is encoded using either an intra or inter coding mode. When a CU is encoded in the intra mode, intra prediction is performed by the intra predictor 144. The intra prediction comprises predicting the current CU 114 being encoded by means of already coded, decoded and reconstructed picture samples located around the current CU, e.g., on the top and on the left of the current CU. The intra prediction is performed in the spatial domain. In an inter mode, motion compensation and motion estimation are performed by the motion estimator 138 which searches, in one or more reference pictures provided by the picture buffer 136 and used to predictively code the current picture, a CU that is a good predictor of a current CU. For example, a good predictor of a current CU is a predictor which is similar to the current CU, i.e., the distortion between the two CUs is low or below a certain threshold. The motion estimation may also account for the rate cost of signalling the predictor to optimize a rate-distortion tradeoff. The output of the motion estimation step is one or more motion vectors and reference indices associated with the current CU. The motion compensation then predicts the current CU by means of the one or more motion vectors and reference pictures indices as determined by the motion estimator 138. Basically, the block or CU contained in the selected reference picture and pointed to by the determined motion vector is used as the prediction block for the current CU. The encoder 100, by means of the selector 140, selects one of the intra coding mode or the inter coding mode to use for encoding the CU and indicates the intra/inter decision, for example, by means of a prediction mode flag. Prediction residuals 110 are then transformed and quantized by blocks 116 and 118, and the quantized transform coefficients as well as the motion vectors and other syntax elements are entropy encoded and written into the output bitstream 120. The encoder 100 may skip the transform stage 116 and apply the quantization directly to the non-transformed residual signal 110 in a so-called transform-skip coding mode. After a block or CU has been encoded, the encoder decodes the CU and reconstructs it so as to obtain the reconstructed signal 110‴ that may serve as a reference data for predicting future CUs or blocks to encode. The quantized transform coefficients 110' are de-quantized and inverse transformed leading to a decoded prediction CU or block 110", and the decoded prediction residuals and the predicted block are then combined at 130, typically summed, so as to provide the reconstructed block or CU 110‴. The in-loop filters 134 are applied to the reconstructed picture to reduce compensation artifacts. For example, a deblocking filter, a sample adaptive offset, SAO, filter, and an adaptive loop filter, ALF, may be applied to reduce encoding artifacts. The filtered picture is stored in the buffer 136, also referred to as the decoded picture buffer, DPB, so that it may be used as a reference picture for coding subsequent pictures.

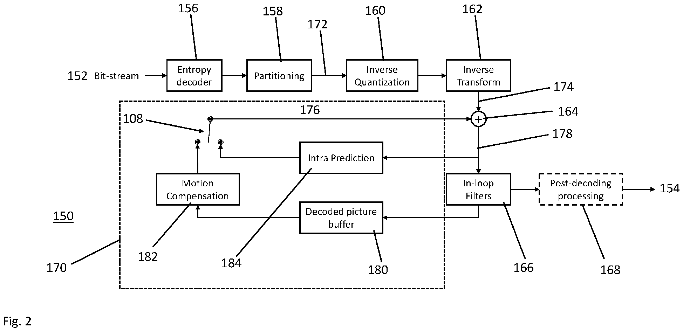

Fig. 2 is a block diagram of a video decoder 150 for predictively decoding from a data or bitstream 152 a picture or video which is provided at an output 154 of the decoder 150. The decoder 150 includes an entropy decoder 156, a partitioning block 158, an inverse quantizer 160, an inverse transformer 162, a combiner 164, an in-loop filter 166, optionally a post-decoding processor 168, and a prediction module 170. The prediction module 170 includes a decoded picture buffer 180 a motion compensator 182 an intra predictor 184.

An encoded picture of a video sequence is decompressed and decoded by the decoder 150 as follows. The input bitstream 152 is entropy decoded by the decoder 156 which provides, for example, the block partitioning information, the coding mode for each coding unit, the transform coefficients contained in each transform block, prediction information, like intra prediction mode, motion vectors, reference picture indices, and other coding information. The block partitioning information indicates how the picture is partitioned and the decoder 150 may divide the input picture into coding tree units, CTUs, typically of a size of 64x64 or 128x128 pixels and divide each CTU into rectangular or square coding units, CUs, according to the decoded partitioning information. The entropy decoded quantized coefficients 172 are de-quantized 160 and inverse transformed 162 so as to obtain the decoded residual picture or CU 174. The decoded prediction parameters are used to predict the current block or CU, i.e., whether the predicted block is to be obtained through its intra prediction or through its motion-compensated temporal prediction. The prediction process performed at the decoder side is the same as the one performed at the encoder side. The decoded residual blocks 174 are added to the predicted block 176, thereby yielding the reconstructed current image block 1768 The in-loop filters 166 are applied to the reconstructed picture or image which is also stored in the decoded picture buffer 180 to serve with the reference picture for future pictures to decode. As mentioned above, the decoded picture may further go through a post-decoding processing, for example for performing an inverse color transformation, for example a conversion from YCbCr 4:2:0 to RGB 4:4:4.

In all above processes, the entropy (de)coding of syntax elements representing encoder decisions such as block partitioning information, prediction modes/parameters, quantized transform coefficients, etc. may be carried out by using a context-adaptive entropy coder, such as Context-Adaptive Binary Arithmetic Coding (CABAC). To use CABAC, each syntax element is first binarized to be represented with a series of bins. Then each bin is associated with a CABAC context model that keeps track of binary values of that particular bin in the past, in order to more efficiently model its probability distribution.

The encoder and decoder designs shown in Fig. 1 and 2 may be used to build the subsequently proposed embodiments thereinto.

In the rest of this disclosure, ZBVC mode is referred to the coding mode where only *one* BV component (i.e. horizontal or vertical) of IBC is explicitly signaled in the bitstream while the other component is inferred to be zero without signaling. The use of this mode is signaled with a CU-level flag and the BV component that is *not* inferred to be zero is referred to as the ZBVC direction. For example, a ZBVC block whose horizontal BV component is inferred to be zero, is referred to as a ZBVC-vertical mode, and vice versa.

Moreover, in the rest of this disclosure, RRIBC mode is referred to the coding mode where the block obtained by applying the displacement indicated by IBC BV is first flipped and then used for prediction of current IBC block. The use of this mode is signaled with a CU-level flag and when RRIBC mode is enabled, the flip direction is referred to as RRIBC direction. For example, an RRIBC block where the prediction block is horizontally flipped, is referred to as an RRIBC-horizontal, and vice versa.

It is noteworthy that above definitions are chosen to facilitate the understanding of this particular invention and might or might not correspond to other definitions outside the context of this invention.

In embodiments of the present invention, all syntax elements from the following two groups of information of an IBC block are transmitted in the bitstream using shared syntax elements:
I. Information for determining internals of the RRIBC mode. An example of what syntax elements consist in this group of information:
   a. "RRIBC flag" **(RribcFlag)** that is signaled if current block is coded as IBC and determines whether current IBC block is coded in RRIBC mode
   b. "RRIBC flip type" **(RribcDir)** that is signaled if current block is coded as RRIBC and determines whether current block is RRIBC-horizontal or RRIBC-vertical
II. Information for determining internals of ZBVC mode. An example of what syntax elements consists in this group of information:
   a. "ZBVC flag" **(ZbvcFlag)** that is signaled if current block is coded as IBC and determines whether current IBC block has one BV component that is inferred to be zero without signaling.
   b. "ZBVC direction" **(ZbvcDir)** flag that is signaled if current IBC block is coded as ZBVC mode and determines whether the horizontal or vertical component of the BV is inferred to be zero without signaling.

Fig, 7 demonstrates the current signaling scheme of ZBVC and RRIBC in ECM-16.0, which allows the following combinations:
- ZBVC-horizontal, RRIBC-horizontal
- ZBVC-horizontal, RRIBC-vertical
- ZBVC-vertical, RRIBC disabled
- ZBVC-horizontal, RRIBC disabled

Embodiments of the present invention propose to exclude some of these combinations of ZBVC and RRIBC and keep those which allows sharing syntax elements between ZBVC and RRIBC.

In one embodiment, two syntax elements from each of group I and group II are shared. In the example above, this embodiment proposes to share RribcFlag with ZbvcFlag and also share RribcDir with ZbvcDir. The following two embodiments describe different approaches to implement this embodiment.

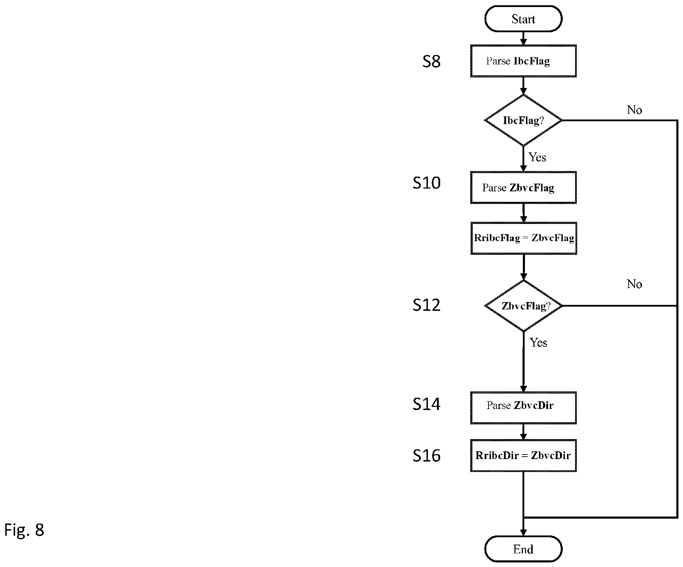

In a related embodiment, first, a syntax element related to ZBVC mode is parsed, then it is reused for its corresponding RRIBC syntax element. In the context of above example of information groups, first, the ZbvcFlag is parsed, then it is reused as RribcFlag. Second, ZbvcDir is parsed, then it is reused as RribcDir. Fig. 8 demonstrates current embodiment.

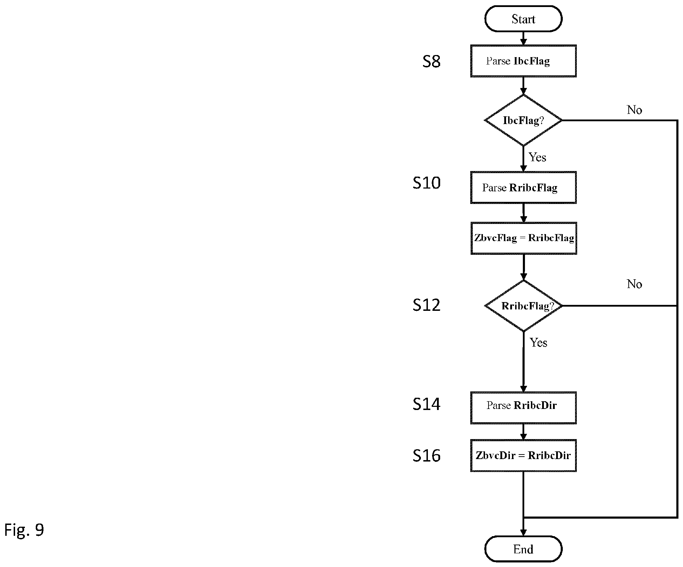

In another related embodiment, first a syntax element related to RRIBC mode is parsed, then it is reused for its counterpart ZBVC syntax element. In the context of above example of information groups, first, the RribcFlag is parsed, then it is reused as ZbvcFlag. Second, the RribcDir is parsed, then it is reused as ZbvcDir. Fig. 9 demonstrates current embodiment.

In an embodiment, the ZBVC mode and the RRIBC mode share the same High-Level Syntax (HLS), such as Sequence Parameter Set (SPS), Picture Parameter Set (PPS) etc.

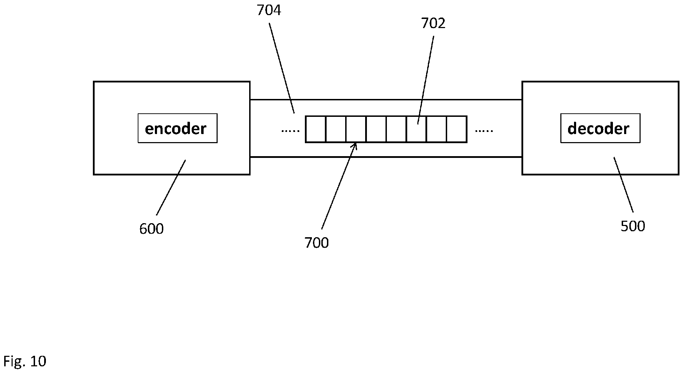

Fig. 10 illustrates a data stream 700 in accordance with embodiments of the present disclosure, which has encoded thereinto a picture and information data associated with the picture. For example, the data stream or bitstream 700 may be provided by an encoder 600 that performs the inventive method for encoding the picture into the data stream 700. The data stream 700 is transmitted to a decoder 500 via a wired or wireless transmission medium 704, like cable or a radio link, and the decoder 500 decodes from the data stream 700 the picture. The data stream might include information 702, which is encoded into the data stream by the encoder 600, with this information controlling the fusion mode as discussed above, i.e. this information may activate the fusion mode for a certain block, and/or may select the fusion mode for this block is the fusion mode is activated, and/or may control the fusion itself for this block if the fusion mode is activated.

Although some aspects of the disclosed concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

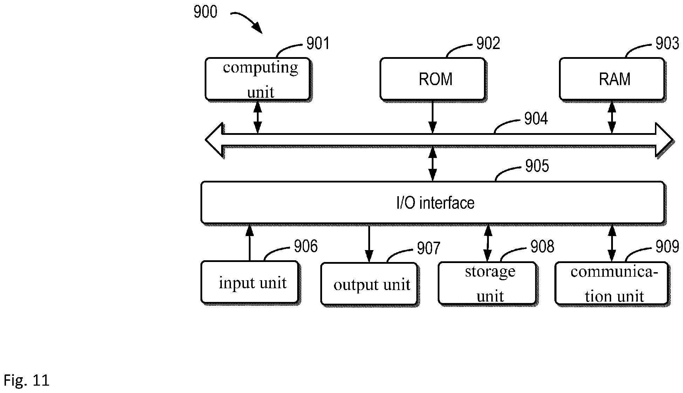

Fig. 11 is a block diagram illustrating an electronic device 900 according to embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital processor, a cellular phone, a smart phone, a wearable device, and other similar computing devices. The components shown herein, their connections and relationships, and their functions are described as examples only, and are not intended to limit implementations of the present disclosure described and/or claimed herein. The device 900 includes a computing unit 901 to perform various appropriate actions and processes according to computer program instructions stored in a read only memory (ROM) 902, or loaded from a storage unit 908 into a random access memory (RAM) 903. In the RAM 903, various programs and data for the operation of the storage device 900 can also be stored. The computing unit 901, the ROM 902, and the RAM 903 are connected to each other through a bus 904. An input/output (I/O) interface 905 is also connected to the bus 904.

Components in the device 900 are connected to the I/O interface 905, including: an input unit 906, such as a keyboard, a mouse; an output unit 907, such as various types of displays, speakers; a storage unit 908, such as a disk, an optical disk; and a communication unit 909, such as network cards, modems, wireless communication transceivers, and the like. The communication unit 909 allows the device 900 to exchange information/data with other devices through a computer network such as the Internet and/or various telecommunication networks. The computing unit 901 may be formed of various general-purpose and/or special-purpose processing components with processing and computing capabilities. Some examples of the computing unit 901 include, but are not limited to, a central processing unit (CPU), graphics processing unit (GPU), various specialized artificial intelligence (AI) computing chips, various computing units that run machine learning model algorithms,. digital signal processor (DSP), and any suitable processor, controller, microcontroller, etc. The computing unit 901 performs various methods and processes described above, such as an image processing method. For example, in some embodiments, the image processing method may be implemented as computer software programs that are tangibly embodied on a machine-readable medium, such as the storage unit 908. In some embodiments, part or all of the computer program may be loaded and/or installed on the device 900 via the ROM 902 and/or the communication unit 909. When a computer program is loaded into the RAM 903 and executed by the computing unit 901, one or more steps of the image processing method described above may be performed. In some embodiments, the computing unit 901 may be configured to perform the image processing method in any other suitable manner (e.g., by means of firmware).

Various implementations of the systems and techniques described herein above may be implemented in digital electronic circuitry, integrated circuit systems, field programmable gate arrays (FPGA), application specific integrated circuits (ASIC), application specific standard products (ASSP), system-on-chip (SOC), complex programmable logic device (CPLD), computer hardware, firmware, software, and/or combinations thereof. These various embodiments may include being implemented in one or more computer programs executable and/or interpretable on a programmable system including at least one programmable processor, and the programmable processor may be a special-purpose or general-purpose programmable processor, and may receive data and instructions from a storage system, at least one input device and at least one output device, and may transmit data and instructions to the storage system, the at least one input device, and the at least one output device.

Program code for implementing the methods of the present disclosure may be written in any combination of one or more programming languages. These program codes may be provided to a processor or controller of a general computer, a dedicated computer, or other programmable data processing device, such that the program codes, when executed by the processor or controller, cause the functions and/or operations specified in the flow diagrams and/or block diagrams is performed. The program code can be executed entirely on the machine, partly on the machine, as a stand-alone software package partly on a machine and partly on a remote machine or entirely on a remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

To provide interaction with a user, the systems and techniques described herein may be implemented on a computer having a display device (e.g., a cathode ray tube (CRT) or liquid crystal display (LCD)) for displaying information for the user; and a keyboard and pointing device (e.g., a mouse or trackball) through which a user can provide an input to the computer. Other types of devices can also be used to provide interaction with the user, for example, the feedback provided to the user may be any form of sensory feedback (e.g., visual feedback, auditory feedback, or tactile feedback); and may be in any form (including acoustic input, voice input, or tactile input) to receive the input from the user.

The systems and techniques described herein may be implemented on a computing system that includes back-end components (e.g., as a data server), or a computing system that includes middleware components (e.g., an application server), or a computing system that includes front-end components (e.g., a user computer with a graphical user interface or web browser through which a user can interact with implementations of the systems and techniques described herein), or a computer system including such a backend components, middleware components, front-end components or any combination thereof. The components of the system may be interconnected by any form or medium of digital data communication (e.g., a communication network). Examples of the communication network includes: Local Area Networks (LAN), Wide Area Networks (WAN), the Internet and blockchain networks.

The computer system may include a client and a server. The Client and server are generally remote from each other and usually interact through a communication network. The relationship of the client and the server is generated by computer programs running on the respective computers and having a client-server relationship with each other. The server may be a cloud server, also known as a cloud computing server or a cloud host, which is a host product in the cloud computing service system, and solves the defects of difficult management and weak business expansion in traditional physical hosts and virtual private servers ("VPS" for short). The server may also be a server of a distributed system, or a server combined with a blockchain.

It is to be understood that the steps may be reordered, added or deleted by using the various forms of flows shown above. For example, the steps described in the present disclosure may be executed in parallel, sequentially, or in different orders, as long as the desired results of the technical solutions in the present disclosure can be achieved, and no limitation is imposed herein.

Further embodiments encompass the following ones, each of which is combinable with one or more of the details set out above.

A 1^{st} embodiment provides a method for decoding a picture (12) from a data stream, the method comprising: predicting a coding unit, CU, (10) of the picture (12) using intra block copy, IBC, wherein, responsive (S12) to a first syntax element signaled in the data stream for the CU (10) having a first predetermined state, a block vector, BV, (14) pointing to a previously decoded portion (16) of the picture (12) is determined by decoding a first component of the BV (14) from the data stream and inferring that a second component of the BV (14) is a predefined value, and a predictor for the CU (10) is determined by subjecting a version of the previously decoded portion (16) of the picture to flipping. That is, the method may comprise predicting a coding unit, CU, 10 of the picture 12 using intra block copy, IBC, by decoding S10 a first syntax element from the data stream for the CU 10; and, responsive S12 to the first syntax element having a first predetermined state, deriving a block vector, BV, 14 pointing to a previously decoded portion 16 of the picture 12 relative to the CU 10 by decoding a first component of the BV 14 from the data stream and inferring a second component of the BV 14 to be zero, and deriving a predictor for the CU 10 by subjecting a version of the previously decoded portion 16 of the picture to flipping. The responsiveness of the decoder may, for instance, manifest itself in the decoder checking the first syntax element having the first predetermined state, and, if so, performing both of the derivation of the BV by the decoding and inferring on the one hand, and the derivation of the predictor by flipping on the other hand, with no further dependency existing which could lead to the decoder merely performing one of the derivation of the BV by the decoding and inferring on the one hand, and the derivation of the predictor by flipping on the other hand. In other words, the decoder is configured to react to the first syntax element having the first predetermined state by inevitably performing, in concert, or together, both of the derivation of the BV by the decoding and inferring on the one hand, and the derivation of the predictor by flipping on the other hand. In even other words, the decoder is configured to check the first syntax element having the first predetermined state, and, if so, perform, inevitably, both of the derivation of the BV by the decoding and inferring on the one hand, and the derivation of the predictor by flipping on the other hand. Note that the first syntax element might be binary or might be a flag as embodied above by the flag named ZbvcFlag or RribcFlag. In other words, in these embodiments, the first syntax element is interpreted as being associated with activating one of the decoding and inferring on the one hand, and the derivation on the other hand, while inferring, in the step following the check, that another flag associated with the other of decoding and inferring on the one hand, and the derivation on the other hand, as activating this other one of decoding and inferring on the one hand, and the derivation on the other hand, but in the end, the above-mentioned responsiveness results. According to an alternative embodiment, rather than acting in response to a predetermined state (like the above mentioned first predetermined state) of a certain syntax element (like the above mentioned first syntax element), the decoder may have its own rule to decide whether to do and how to do the direction determination and the flipping. Stated differently, the decoder may determine on its own whether to perform and how to perform, e.g., RRIBC and ZBVC.

A 2^{nd} embodiment, which is according to the 1^{st} embodiment, comprises responsive S12 to the first syntax element having a first predetermined state, decoding S14 a directional syntax element from the data stream for the CU 10, and selecting which of the horizontal component and the vertical component of the BV 14 is the first and second component, respectively, and as to whether the flipping is a horizontal flipping or a vertical flipping depending on the directional syntax element.

According to a 3^{rd} embodiment, which is according to the 2^{nd} embodiment, the directional syntax element is a binary syntax element and the method comprises appointing S16 the horizontal component the first component and the vertical component the second component and selecting the flipping to be horizontal responsive to the directional syntax element having a first directional state, and appointing the vertical component the first component and the horizontal component the second component and selecting the flipping to be vertical responsive to the directional syntax element having a second directional state. That is, the decoder not only uses the above common responsiveness with respect to the activation of both the decoding and inferring on the one hand, and the derivation on the other hand, but also has a common responsiveness to the directional syntax element in order to set both the direction of the flipping and the direction with respect to which the zero inference of the BV is done.

According to a 4^{th} embodiment, which is according to the 3^{rd} embodiment, the method comprises decoding S8, for each of a set of CUs, a coding mode syntax element from the data stream, and, for each CU of the set of CU, for which the coding mode syntax element is indicative of an IBC mode, decoding S10 the first syntax element from the data stream for the respective CU; responsive to the first syntax element having a first predetermined state, deriving a block vector, BV, pointing to a previously decoded portion of the picture relative to the respective CU by decoding a first component of the BV from the data stream and inferring a second component of the BV to be zero, and deriving a predictor for the respective CU by subjecting a version of the previously decoded portion of the picture to flipping.

According to a 5^{th} embodiment, which is according to the 4^{th} embodiment, the method comprises, for each CU of the set of CU, for which the coding mode syntax element is not indicative of the IBC mode, decoding the respective CU without use of IBC. For instance, intra prediction using extrapolation from the already decoded neighborhood of the CU into the CU or inter prediction using a motion vector might be used.

According to a 6^{th} embodiment, which is according to any of the 1^{st} to 4^{th} embodiments, the method comprises, responsive to the first syntax element having a second predetermined state, deriving the block vector, BV, by one or more of decoding the first component of the BV from the data stream and decoding the second component of the BV from the data stream for the CU, and deriving the BV of the CU by temporal and/or spatial BV prediction. That is, it might be that neither one of the derivation of the BV by the decoding and inferring on the one hand, and the derivation of the predictor by flipping on the other hand is used on case of the first syntax element having the second state, but it could alternatively be that the activation of at least one of the derivation of the BV by the decoding and inferring on the one hand, and the derivation of the predictor by flipping on the other hand is signaled in case of first syntax element having the second predetermined state by decoding a corresponding conditionally sent syntax element for activating the derivation of the BV by the decoding and inferring on the one hand, and/or a corresponding conditionally sent syntax element for activating the derivation of the predictor by flipping on the other hand.

According to a 7^{th} embodiment, which is according to any of the 1^{st} to 6^{th} embodiments, the method comprises, responsive to a high level syntax, relating to a video portion of a video comprising the picture, which contains the picture and further pictures of the video, controlling suppressing or activating the decoding of the first syntax element from the data stream for CUs of the picture.

An 8^{th} embodiment provides a method for encoding a picture 12 from a data stream, the method comprising: encoding a coding unit, CU, (10) of the picture (12) using, for prediction, intra block copy, IBC, wherein a first syntax element is signaled in the data stream for the CU (10) which signals, by way of the first syntax element having a first predetermined state, that the CU (10) is to be predicted 1) based on a block vector, BV, (14) pointing to a previously encoded portion (16) of the picture (12) relative to the CU (10), wherein a first component of the BV (14) is signaled in the data stream and a second component of the BV (14) is inferred to be a predefined value, and 2) by determining a predictor for the CU (10) by subjecting a version of the previously encoded portion (16) of the picture to flipping. In other words, the method may comprise encoding a coding unit, CU, 10 of the picture 12 using, for prediction, intra block copy, IBC, by encoding S10 a first syntax element into the data stream for the CU 10 which signals, by way of the first syntax element having a first predetermined state, that the CU 10 is to be predicted 1) based on a block vector, BV, 14 pointing to a previously encoded portion 16 of the picture 12 relative to the CU 10, which is derivable from a first component of the BV 14 which is encoded into the data stream and by inferring a second component of the BV 14 to be zero, and 2) by deriving a predictor for the CU 10 by subjecting a version of the previously encoded portion 16 of the picture to flipping. That is, the encoder is able to, in testing for instance, on a most effective signaling or coding option for the CU using, for instance, R/D optimization, exploit the common responsiveness of the decoder which, accordingly, upon checking the first syntax element having the first predetermined state, performs both of the derivation of the BV by the decoding and inferring on the one hand, and the derivation of the predictor by flipping on the other hand, with no further dependency existing which could lead to the decoder merely performing one of the derivation of the BV by the decoding and inferring on the one hand, and the derivation of the predictor by flipping on the other hand. In other words, the encoder is able to signal the activation of both the derivation of the BV by the decoding and inferring on the one hand, and the derivation of the predictor by flipping on the other hand by merely using this one first syntax element, namely by setting it onto the first state. According to an alternative embodiment, rather than acting in response to a predetermined state (like the above mentioned first predetermined state) of a certain syntax element (like the above mentioned first syntax element), the decoder may have its own rule to decide whether to do and how to do the direction determination and the flipping. Stated differently, the decoder may determine on its own whether to perform and how to perform, e.g., RRIBC and ZBVC.

According to a 9^{th} embodiment, which is according to the 8^{th} embodiments, the method comprises, responsive S12 to the first syntax element having a first predetermined state, encoding S14 a directional syntax element into the data stream for the CU 10, which selects which of the horizontal component and the vertical component of the BV 14 is the first and second component, respectively, and as to whether the flipping is a horizontal flipping or a vertical flipping depending on the directional syntax element.

According to a 10^{th} embodiment, which is according to the 9^{th} embodiments, the directional syntax element is a binary syntax element and the horizontal component is appointed the first component and the vertical component the second component and the flipping is selected to be horizontal responsive to the directional syntax element having a first directional state, and the vertical component is appointed the first component and the horizontal component the second component and the flipping is selected to be vertical responsive to the directional syntax element having a second directional state.

According to an 11^{th} embodiment, which is according to any of the 8^{th} to 10^{th} embodiments, the method comprised encoding S8, for each of a set of CUs, a coding mode syntax element into the data stream, and, for each CU of the set of CU, for which the coding mode syntax element is indicative of an IBC mode, encoding S10 the first syntax element into the data stream for the respective CU which signals, by way of the first syntax element having a first predetermined state, that the CU (10) is to be predicted 1) based on a block vector, BV, pointing to a previously encoded portion of the picture relative to the respective CU, which is derivable from a first component of the BV which is encoded into the data stream and by inferring a second component of the BV to be zero, and 2) by deriving a predictor for the respective CU by subjecting a version of the previously encoded portion of the picture to flipping.

According to a 12^{th} embodiment, which is according to the 11^{th} embodiment, the method comprises, for each CU of the set of CU, for which the coding mode syntax element is not indicative of the IBC mode, encoding the respective CU without use of IBC.

According to a 13^{th} embodiment, which is according to any of the 8^{th} to 12^{th} embodiments, the method comprises, signaling by the first syntax element having a second predetermined state, that the block vector, BV, is to be derived by one or more of decoding the first component of the BV from the data stream and decoding the second component of the BV from the data stream for the CU, and deriving the BV of the CU by temporal and/or spatial BV prediction. That is, it might be that neither one of the derivation of the BV by the decoding and inferring on the one hand, and the derivation of the predictor by flipping on the other hand is used on case of the first syntax element having the second state, but it could alternatively be that the activation of at least one of the derivation of the BV by the decoding and inferring on the one hand, and the derivation of the predictor by flipping on the other hand is signaled in case of first syntax element having the second predetermined state by decoding a corresponding conditionally sent syntax element for activating the derivation of the BV by the decoding and inferring on the one hand, and/or a corresponding conditionally sent syntax element for activating the derivation of the predictor by flipping on the other hand.

According to a 14^{th} embodiment, which is according to any of the 8^{th} to 13^{th} embodiments, the method comprises singling by a high level syntax, relating to a video portion of a video comprising the picture, which contains the picture and further pictures of the video, that the decoding of the first syntax element from the data stream for CUs of the picture is to be suppressed or is activated.

A 15^{th} embodiment provides an apparatus for decoding a picture 12 from a data stream, configured to predict a coding unit, CU, 10 of the picture 12 using intra block copy, IBC, by decoding a first syntax element from the data stream for the CU 10; responsive to the first syntax element having a first predetermined state, deriving a block vector, BV, 14 pointing to a previously decoded portion 16 of the picture 12 relative to the CU 10 by decoding a first component of the BV 14 from the data stream and inferring a second component of the BV 14 to be zero, and deriving a predictor for the CU 10 by subjecting a version of the previously decoded portion 16 of the picture to flipping.

A 16^{th} embodiment provides an apparatus for encoding a picture 12 from a data stream, configured to encode a coding unit, CU, 10 of the picture 12 using, for prediction, intra block copy, IBC, by encoding S10 a first syntax element into the data stream for the CU 10 which signals, by way of the first syntax element having a first predetermined state, that the CU 10 is to be predicted based on a block vector, BV, 14 pointing to a previously encoded portion 16 of the picture 12 relative to the CU 10, which is derivable from a first component of the BV 14 which is encoded into the data stream and by inferring a second component of the BV (14) to be zero, and by deriving a predictor for the CU 10 by subjecting a version of the previously encoded portion 16 of the picture to flipping.

A 17^{th} embodiment provides a data stream having encoded thereinto a picture, wherein the data stream is encoded using a method according to claim 8.

### List of Abbreviations

- AVC: ISO/IEC 14496-10 Advanced Video Coding (AVC) / ITU-T Rec. H.264 [1]
- EVC: ISO/IEC 23094-1 Essential video coding (EVC)
- HEVC: ISO/IEC 23008-2 High Efficiency Video Coding (HEVC) / ITU-T Rec. H.265 [2]
- VVC: ISO/IEC 23090-3 Versatile Video Coding (VVC) / ITU-T Rec. H.266 [3]
- AV1: AOMedia Video 1 (AV1

### References

[1] H.264: Advanced video coding for generic audiovisual services, https://www.itu.int/rec/T-REC-H.264-202108-P/en
[2] H.265: High efficiency video coding, https://www.itu.int/rec/T-REC-H.265-202108-P/en
[3] H.266: Versatile video coding, https://www.itu.int/rec/T-REC-H.266-202008-I/en
[4] AV1 Bitstream & Decoding Process Specification, http://aomedia.org/av1/specification/
[5] Algorithm description of Enhanced Compression Model 12 (ECM 12), document JVET-AG2025, https://jvet-experts.org/doc_end_user/documents/33_Teleconference/wa11/JVET-AG2025-v1.zip

## Claims

1. A method for decoding a picture (12) from a data stream, the method comprising:
predicting a coding unit, CU, (10) of the picture (12) using intra block copy, IBC, wherein, responsive (S12) to a first syntax element signaled in the data stream for the CU (10) having a first predetermined state, a block vector, BV, (14) pointing to a previously decoded portion (16) of the picture (12) is determined by decoding a first component of the BV (14) from the data stream and inferring that a second component of the BV (14) is a predefined value, and a predictor for the CU (10) is determined by subjecting a version of the previously decoded portion (16) of the picture to flipping.

2. The method of claim 1, wherein, responsive (S12) to the first syntax element having a first predetermined state, a directional syntax element is decoded from the data stream for the CU (10), and a selection which of the horizontal component and the vertical component of the BV (14) is the first and second component, respectively, and as to whether the flipping is a horizontal flipping or a vertical flipping is made depending on the directional syntax element.

3. The method of claim 2, wherein the directional syntax element is a binary syntax element, and wherein the horizontal component is appointed the first component and the vertical component the second component and the flipping is selected to be horizontal responsive to the directional syntax element having a first directional state, and the vertical component is appointed the first component and the horizontal component the second component and the flipping is selected to be vertical responsive to the directional syntax element having a second directional state.

4. The method of any of claims 1 to 3, wherein, for each of a set of CUs, a coding mode syntax element is decoded from the data stream, and, for each CU of the set of CU, for which the coding mode syntax element is indicative of an IBC mode, responsive to the first syntax element for the respective CU having a first predetermined state, a block vector, BV, pointing to a previously decoded portion of the picture is derived by decoding a first component of the BV from the data stream and inferring a second component of the BV to be the predefined value, and a predictor for the respective CU is determined by subjecting a version of the previously decoded portion of the picture to flipping.

5. The method of claim 4, wherein, for each CU of the set of CU, for which the coding mode syntax element is not indicative of the IBC mode, the respective CU is decoded without use of IBC.

6. The method of any of claims 1 to 5, wherein, responsive to the first syntax element having a second predetermined state, the block vector, BV, is determined by one or more of
decoding the first component of the BV from the data stream and decoding the second component of the BV from the data stream for the CU, and
determining the BV of the CU by temporal and/or spatial BV prediction.

7. The method of any of claims 1 to 6, wherein, by way of a high level syntax, relating to a video portion of a video comprising the picture, which contains the picture and further pictures of the video, it is controlled whether the first syntax element is signaled in the data stream for CUs of the picture.

8. A method for encoding a picture (12) from a data stream, the method comprising:
encoding a coding unit, CU, (10) of the picture (12) using, for prediction, intra block copy, IBC, wherein a first syntax element is signaled in the data stream for the CU (10) which signals, by way of the first syntax element having a first predetermined state, that the CU (10) is to be predicted
based on a block vector, BV, (14) pointing to a previously encoded portion (16) of the picture (12) relative to the CU (10), wherein a first component of the BV (14) is signaled in the data stream and a second component of the BV (14) is inferred to be a predefined value, and
by determining a predictor for the CU (10) by subjecting a version of the previously encoded portion (16) of the picture to flipping.

9. The method of claim 8, wherein, responsive (S12) to the first syntax element having the first predetermined state, a directional syntax element is encoded into the data stream for the CU (10), which selects which of the horizontal component and the vertical component of the BV (14) is the first and second component, respectively, and as to whether the flipping is a horizontal flipping or a vertical flipping.

10. The method of claim 9, wherein the directional syntax element is a binary syntax element and the horizontal component is appointed the first component and the vertical component the second component and the flipping is selected to be horizontal responsive to the directional syntax element having a first directional state, and the vertical component is appointed the first component and the horizontal component the second component and the flipping is selected to be vertical responsive to the directional syntax element having a second directional state.

11. The method of any of claims 8 to 10, wherein , for each of a set of CUs, a coding mode syntax element is encoded into the data stream, and, for each CU of the set of CU, for which the coding mode syntax element is indicative of an IBC mode, the first syntax element is signaled in the data stream for the respective CU, which signals, by way of the first syntax element having a first predetermined state, that the CU (10) is to be predicted
based on a block vector, BV, pointing to a previously encoded portion of the picture relative to the respective CU, which is derivable from a first component of the BV which is encoded into the data stream and by inferring a second component of the BV to be zero, and
by deriving a predictor for the respective CU by subjecting a version of the previously encoded portion of the picture to flipping.

12. The method of claim 11, wherein, for each CU of the set of CU, for which the coding mode syntax element is not indicative of the IBC mode, the respective CU is encoded without use of IBC.

13. An apparatus for decoding a picture (12) from a data stream, configured to
predict a coding unit, CU, (10) of the picture (12) using intra block copy, IBC, by, responsive to the first syntax element having a first predetermined state, determining a block vector, BV, (14) pointing to a previously decoded portion (16) of the picture (12) relative to the CU (10) by decoding a first component of the BV (14) from the data stream and inferring a second component of the BV (14) to be zero, and determining a predictor for the CU (10) by subjecting a version of the previously decoded portion (16) of the picture to flipping.

14. An apparatus for encoding a picture (12) from a data stream, configured to
encode a coding unit, CU, (10) of the picture (12) using, for prediction, intra block copy, IBC, by signaling, by way of the first syntax element signaled in the data stream for the CU having a first predetermined state, that the CU (10) is to be predicted
based on a block vector, BV, (14) pointing to a previously encoded portion (16) of the picture (12) relative to the CU (10), which is derivable from a first component of the BV (14) which is encoded into the data stream and by inferring a second component of the BV (14) to be zero, and
by determining a predictor for the CU (10) by subjecting a version of the previously encoded portion (16) of the picture to flipping.

15. A data stream having encoded thereinto a picture, wherein the data stream is encoded using a method according to claim 8.
